# EUROPÄISCHE PATENTANMELDUNG

(11) **EP 1 079 331 A1**
(43) Veröffentlichungstag der Anmeldung: **28.02.2001**
(21) Anmeldenummer: 00118057.9
(22) Anmeldetag: 23.08.2000
(51) Int. Cl.: G06T 11/60, G06F 17/28

(54) **Einfügung in digitale Bilder der Übersetzungen ursprünglicher Textelemente**

(30) Priorität: 25.08.1999 DE 19941123
(71) Anmelder: Only Solutions GmbH, 34123 Kassel (DE)
(72) Erfinder: Seeber, René, Dipl.-Math., 34314 Espenau (DE)
(74) Vertreter: Freiherr von Schorlemer, Reinfried, Dipl.-Phys.

(57) **Zusammenfassung**

Es wird ein digitales Bildverarbeitungssystem zur Verarbeitung und ggf. Darstellung von Bildern mit Bild- und Original-Textelementen beschrieben. Das Bildverarbeitungssystem enthält eine digitale Bildquelle (1), eine Bildwiedergabesteuerung (5) und eine zwischen beide geschaltete Bildverarbeitungseinrichtung (3). Erfindungsgemäß ist das Bildverarbeitungssystem mit einer zur Bereitstellung von Übersetzungen der Original-Textelemente in eine andere Sprache eingerichteten Bildverarbeitungseinheit (11) versehen, die eine Texterkennungseinheit (17) und eine Textübersetzungseinheit (18) aufweist.

## Beschreibung

Die Erfindung betrifft ein digitales Bildverarbeitungssystem der im Oberbegriff des Anspruchs 1 angegebenen Gattung.

Bei einem bekannten Bildverarbeitungssystem dieser Art (DE 197 16 449 A1) werden von einer digitalen Bildquelle wie z. B. einer digitalen Kamera gelieferte Bilder mittels einer Signalverarbeitungseinrichtung aufbereitet, die z. B. aus einem digitalen Signalprozessor (DSP) besteht. Anschließend werden die erhaltenen Signale einer Bildwiedergahesteuerung zugeführt, die z. B. mit den erforderlichen digitalen Treibern, Modulatoren oder dgl. ausgerüstet ist, und von dort zur Darstellung der Bilder an eine Bildwiedergabeeinrichtung wie z. B. das Display eines digitalen Camcorders oder einer digitalen Fotokamera, einen Fernsehbildschirm oder irgendein anderes geeignetes Display weitergeleitet.

Während Bilder, die ausschließlich aus Bildelementen bestehen, von den Betrachtern ohne weiteres erfaßt und aufgenommen werden können, ergeben sich immer dann Probleme, wenn die Bilder auch Textelemente enthalten, die in eine für den Betrachter unbekannten Sprache erscheinen. Es ist für die Betrachter dann bei Bedarf erforderlich, einzelne Textelemente mit Hilfe von Lexika oder dgl. zu übersetzen. Das ist aber nicht immer und nicht immer mit der gewünschten Genauigkeit möglich, weil meistens nicht die erforderlichen Lexika zur Verfügung stehen oder die eingeblendeten Textelemente bei laufenden Bildern zu schnell wieder verschwinden.

Der Erfindung liegt daher die Aufgabe zugrunde, das Bildverarbeitungssystem der eingangs bezeichneten Gattung so auszubilden, daß sich die Betrachter der Bilder vergleichsweise einfach und schnell über den Inhalt der Textelemente informieren können.

Zur Lösung dieser Aufnahme dienen die kennzeichnenden Merkmale des Anspruchs 1.

Das erfindungsgemäße Bildverarbeitungsystem kann im Hinblick auf die Zeit und den Ort der Darstellung der übersetzten Textelemente in unterschiedlichen Versionen angeboten werden. In zeitlicher Hinsicht besteht eine erste, allerdings kostspielige Möglichkeit darin, die in eine vorgegebene oder auch vorwählbare Sprache übersetzten Textelemente live, d. h. in Echtzeit der Bildwiedergabeeinrichtung zur Verfügung zu stellen. Wo dies nicht erforderlich oder aus Kostengründen nicht erwünscht ist, ist es in einer zweiten Variante möglich, die Übersetzung zu einem späteren Zeitpunkt und auf Abruf durch den Benutzer erscheinen zu lassen. In örtlicher Hinsicht ist es dagegen z. B. möglich, die übersetzten Textelemente anstelle der Original-Textelemente erscheinen zu lassen, die Original-Textelemente zusammen mit eingeblendeten übersetzten Textelementen darzustellen oder die übersetzten Textelemente an einer ganz anderen Position des Bildes anzuordnen, wobei die nicht übersetzten Original-Textelemente z. B. mit einem Verweis auf die übersetzten Textelemente (und/oder umgekehrt) versehen werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 ein funktionelles Blockdiagramm eines Bildverarbeitungssystems mit einer erfindungsgemäßen Bildverarbeitungseinheit und
Fig. 2 ein schematisches und verkürzt dargestelltes Fließdiagramm eines die Bildverarbeitungseinheit nach Fig. 1 steuernden Mikrocomputer-Programms.

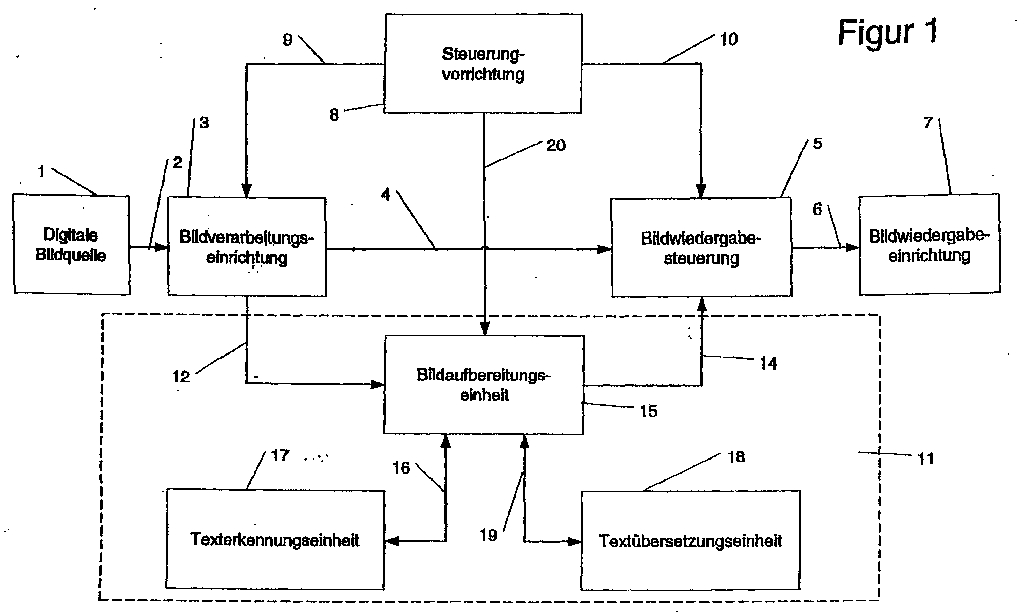

Gemäß Fig. 1 enthält ein Bildverarbeitungssystem eine digitale Bildquelle 1, an die über eine Leitung 2 eine Bildverarbeitungseinrichtung 3 angeschlossen ist. Der Bildsignalausgang der Bildverarbeitungseinrichtung 3 führt über eine Leitung 4 zu einer Bildwiedergabesteuerung 5, die mit allen erforderlichen Treibern, Modulatoren oder dgl. ausgestattet ist, um die von der Bildquelle 1 gelieferten Bilder über eine Leitung 6 an wenigstens eine ausgewählte Bildwiedergabeeinrichtung 7 weiterleiten und auf deren Bildschirm darstellen zu können. Außerdem ist eine Steuerungsvorrichtung 8 vorgesehen, die über Leitungen 9 und 10 mit der Bildverarbeitungseinrichtung 3 bzw. der Bildwiedergabesteuerung 5 verbunden ist.

Bildverarbeitungssysteme dieser Art sind allgemein bekannt (z. B. DE 197 16 449 A1) und brauchen dem Fachmann daher nicht näher erläutert werden. Die Funktionsweise eines solchen Bildverarbeitungssystems ist im wesentlichen wie folgt:

Die digitale Bildquelle 1 liefert digitale Bilder und besteht z. B. aus einem digitalen Bildaufnehmer (CCD-Sensor) oder einem digitalen Speichermedium. Alternativ kann sie digitale Bilder aus einer externen Quelle oder einem System wie z.B. dem Internet empfangen, das dem Bildverarbeitungssystem übergeordnet ist. Die digitalen Bilder werden über die Leitung 2 der Bildverarbeitungseinrichtung 3 zugeführt, die z. B. wenigstens einen Mikrocomputer in Form eines schnellen digitalen Signalprozessors (DSP) und eine Speichereinheit enthält. Die Bilder werden hier aufbereitet, und mit Hilfe der Steuerungsvorrichtung 8 können verschiedene Funktionen gesteuert oder beeinflußt werden, wie dies z. B. bei Bildverarbeitungssystemen in Form von digitalen Foto- oder Videokameras (Camcordern), digitalen Fernsehgeräten sowie Videokonferenzsystemen mit digitaler Bildverarbeitung oder auch von Computerprogrammen her bekannt ist, die digitale Bilder verarbeiten und an einem Bildschirm anzeigen. Insbesondere können mit Hilfe der Mikrocomputertechnik komplexe Aufgaben wie z.B. Bildkorrekturen, Standbilder, Einstellung der Helligkeit, Bildspeicherung, spezielle Bildwiedergaben oder dgl. bewältigt, aber auch einfachere Befehle wie "Start", "Stop", "Aufnahme" oder dgl. durchgeführt werden. Das ist unabhängig davon, ob es sich bei der Bildquelle 1 z. B. um eine zusätzlich mit einer geeigneten Optik versehene digitale Kamera für Einzelbilder oder laufende Bilder handelt oder ob die digitale Bildquelle 1 die Bilder z. B. von einem Videoabspielgerät bezieht.

Die in der Bildverarbeitungseinrichtung 3 erhaltenen Bildsignale werden der Bildwiedersteuerung 5 zugeführt und in dieser z. B. zur Wiedergabe auf einem Bildschirm der Bildwiedergabeeinrichtung 7 vorbereitet. Dabei können mittels der Steuerungsvorrichtung 8 wiederum verschiedene Funktionen wie z. B. die Bildvergrößerung bzw. Bildverkleinerung beeinflußt werden. Beispiele für die Bildwiedereinrichtung 7 sind neben üblichen digitalen Bildschirmen bzw. Displays auch über externe Anschlüsse erreichbare Mittel zur Weiterverarbeitung von Bildern, z. B. Geräte zur Schnittsteuerung oder zur späteren Vertonung, wobei die Bildwiedergabesteuerung 5 z. B. einen Videoanschluß und/oder eine Schnittstelle für einen Computer aufweisen kann.

Die beschriebenen Bildverarbeitungssysteme liefern häufig Bilder, die neben reinen Bildelementen auch reine Textelemente oder mit Textelementen kombinierte Bildelernente enthalten, wie dies z. B. aus der Werbung allgemein bekannt ist. Um derartige Textelemente allgemein lesbar zu machen, weist das erfindungsgemäße Bildverarbeitungssystem zusätzlich zu den beschriebenen Einrichtungen eine in das System integrierte Bildverarbeitungseinheit 11 auf, die einen Eingang 12, der mit einem z. B. von der Leitung 4 gebildeten Ausgang der Bildverarbeitungseinrichtung 3 verbunden ist, und einen mit der Bildwiedergabesteuerung 5 verbundenen Ausgang 14 aufweist. Die Bildverarbeitungseinheit 11 dient dem Zweck und ist dazu eingerichtet, die Original-Textelemente, die in den von der Bildquelle 1 gelieferten Bilder enthalten sind, in eine Sprache zu übersetzen, die von der Sprache, in der sie geliefert werden, abweicht. Dadurch wird die Möglichkeit geschaffen, die Orginal-Textelemente in übersetzte Textelemente umzuwandeln, die in eine an sich beliebige Sprache übersetzt sind.

Die erfindungsgemäße Bildverarbeitungseinheit 11 enthält vorzugsweise einen separaten Baustein in Form einer mit der Bildverarbeitungseinrichtung 3 und der Bildwiedergabesteuerung 5 verbundenen Bildaufbereitungseinheit 15, die das digitale Bild von der Bildverarbeitungseinrichtung 3 übernimmt, die digitalen Bilddaten in einzelne, z. B. in einem Koordinatensystem angeordnete Bildpunkte (Pixel) organisiert und dadurch die Bilddaten in ein zur Erkennung von Text geeignetes Format bringt. Falls die Bilddaten bereits von der Bildquelle 1 oder von der Bildverarbeitungseinrichtung 3 in einem solchen Organisationsformat übertragen werden, kann die Formatierung entfallen. Außerdem kann die Bildaufbereitungsungseinheit 15 auch als Bestandteil der Bildverarbeitungseinrichtung 3 ausgebildet und z. B. in dieser als zusätzlicher Programmbaustein vorhanden sein, so daß ein darin gespeichertes Ablaufprogramm bei laufender Bildverarbeitungseinrichtung 3 automatisch mit abläuft und der Bildaufbereitungseinheit 11 die erforderlichen Daten liefert. Entsprechend könnte die gesamte Bildverarbeitungseinheit 11 in die Bildverarbeitungseinrichtung 3 integriert sein, in der die Blöcke 15, 17 und 18 z. B. als einzelne Programmbausteine implementiert sind.

Die Bildaufbereitungseinheit 15 übergibt die digitalen Bilder über eine Leitung 16 an eine Texterkennungseinheit 17, die innerhalb des Bildes alle relevanten Texte und Schriftzüge, die die in den digitalen Bildern enthaltenen Original-Textelemente bilden, aufsucht und erkennt, in eine Computersprache bzw. einen Zeichencode (z. B. ASCII-Code) übersetzt und ggf. zusammen mit Informationen über die Koordinaten und die Größen derjenigen Bereiche ausgibt, in denen die Original-Textelemente erkannt wurden.

Als Texterkennungseinheit 17 können bekannte Texterkennungsbausteine verwendet werden, die z. B. von der Fa. Caere Corp., Los Gatos, Kalif./USA oder unter der Bezeichnung "Textbridge" von der Fa. Xerox Corp., Rochester, N. Y./USA hergestellt und vertrieben werden. Derartige Texterkennungsbausteine sind insbesondere zum Auffinden und Erkennen von dunklen Schriften auf einem homogenen hellen Hintergrund und/oder von horizontal ausgerichteten Textzeilen geeignet, werden aber bisher nur in Verbindung mit speziellen Schriftabtast- und Erkennungsvorrichtungen verwendet. Hierbei ist es üblich, Textblöcke zu finden, aus diesen einzelne Textzeilen zu extrahieren, danach einzelne Schriftzeichen zu separieren und ggf. mit gespeicherten Mustern zu vergleichen sowie anschließend die ausgegebenen Daten zu generieren. Bei Bedarf wäre es für die Zwecke der Erfindung zusätzlich möglich, spezielle Methoden zur Segmentierung der Bilder in einzelne Texturen anzuwenden, für jedes einzelne Textursegment zu entscheiden, ob es sich um eine Text- oder Bild-Textur handelt, die als Text-Texturen erkannten Segmente in Bildausschnitte mit schwarzer Schrift auf hellem Hintergrund umzuwandeln und die so erhaltenen Schriftzeilen zu drehen, bis sie horizontal angeordnet sind, bevor mit der eigentlichen Zeichenerkennung begonnen wird.

Die Ausgabe der Texterkennungseinheit 17 wird entweder direkt an eine Textübersetzungseinheit 18 oder über die Leitung 16 an die Bildaufbereitungseinheit 15 übergeben, um dann von dieser über eine Leitung 19 an die Textübersetzungseinheit 18 weitergeleitet zu werden. Außerdem wird der Textübersetzungseinheit 18 von der Bildaufbereitungseinheit 15 mitgeteilt, nach welchen Regeln sie arbeiten und die Textdaten übersetzen soll. Weiterhin steht die Bildaufbereitungseinheit 15 über eine Leitung 20 mit der Steuerungsvorrichtung 8 in Verbindung, mittels derer die Übersetzungsregeln bei Bedarf auch beeinflußt werden können. Möglich wäre ferner, die Textübersetzungseinheit 18 aus wenigstens zwei, zur Übersetzung in unterschiedliche Sprachen bestimmten Abschnitten zusammenzusetzen und diesen einen Wählschalter zuzuordnen, um die Sprache, in die die Orginal-Textelemente übersetzt werden sollen, frei auswählen zu können. Daten der übersetzten Textelemente werden von der Textübersetzungseinheit 18 zurück an die Bildaufbereitungseinheit 15 geliefert.

Die Textübersetzungseinheit 18 wird zweckmäßig in an sich bekannter Weise auf digital vorliegenden Wörterbüchern aufgebaut, wobei jedem irgendeiner Sprache zugeordneten Abschnitt zweckmäßig ein zugehöriges Wörterbuch zugeordnet ist. Im einfachsten Fall wird eine Übersetzung Wort für Wort vorgenommen, ohne dabei den Kontext der Textelemente, Grammatikregeln od. dgl. zu berücksichtigen. Jedem in der Texterkennungseinheit 17 erkannten Wort wird in diesem Fall ein entsprechendes Wort in einer anderen Sprache zugeordnet, was für zahlreiche Anwendungsfälle ausreichend ist. Nicht im Wörterbuch vorhandene Worte können dabei natürlich nicht übersetzt werden.

Textübersetzungseinheiten 18 der hier interessierenden Art sind als Textübersetzungsmodule allgemein bekannt und auf dem Markt verfügbar (z. B. Langenscheidt, Hexaglot), werden bisher allerdings nur für ganz andere Anwendungsfälle eingesetzt. Über die Steuerungsvorrichtung 8 kann dabei vorzugsweise nicht nur der jeweilige Abschnitt bzw. die jeweilige Sprache vorgewählt, sondern auch eine vorgewählte Sprache fest eingestellt werden.

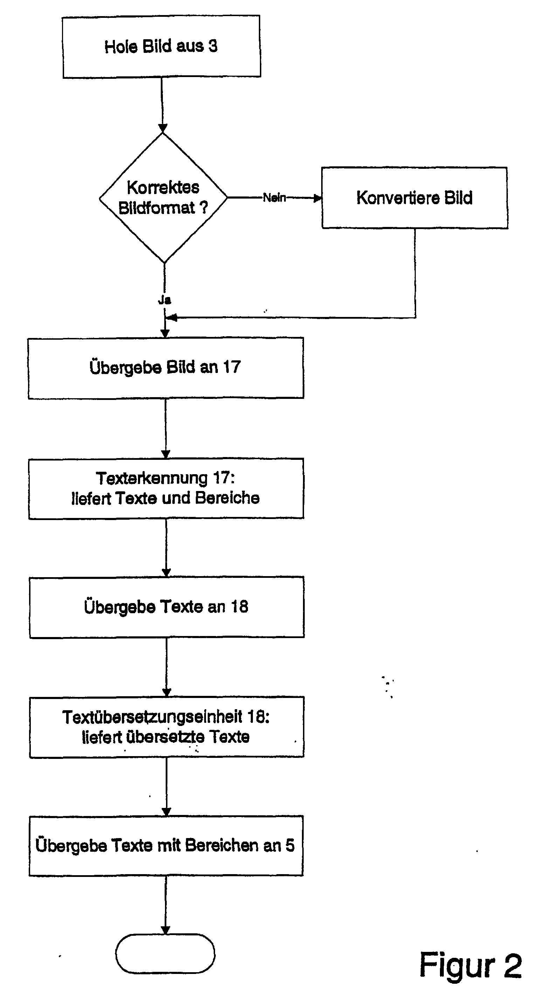

Die Bildaufbereitungseinheit 15 besteht analog zur Bildverarbeitungseinrichtung 3 vorzugsweise aus einem Mikrocomputer, der nach einem vorgegebenen Ablaufprogramm arbeitet. Ein derartiges Ablaufprogramm ist in seiner einfachsten Variante anhand eines Fließdiagramms in Fig. 2 dargestellt.

Die auf die beschriebene Weise an die Bildaufbereitungseinheit 15 gelieferten und in dieser für die weitere Anwendung bereitstehenden Daten der übersetzten Textelemente können unter der Steuerung der Steuerungsvorrichtung 8 der Bildwiedergabesteuerung 5 zugeführt und von dieser an eine an sich beliebige angeschlossene Bildverarbeitungs- oder Bildwiedergabevorrichtung weitergeleitet werden. Besteht diese aus der Bildwiedergabeeinheit 7 in Form eines Fernsehbildschirmes oder eines sonstigen Displays, kann die Wiedergabe der übersetzten Textelemente live, d. h. in Echtzeit erfolgen. Alternativ kann der Bildverarbeitungseinheit 11 ein Schalter zugeordnet werden, der die übersetzten Textelemente nur im geschlossenen Zustand an die Bildwiedergabesteuerung 5 weiterleitet und von einem Benutzer des Bildverarbeitungssystems z. B. nur dann betätigt wird, wenn ein aktueller Bedarf vorliegt.

Gemäß einer weiteren Ausführungsform der Erfindung ist es möglich, die Ausgabe der Bildverarbeitungseinheit 11 über die Leitung 14 einem Sprachsynthesizer zuzuführen, an den ein Lautsprecher oder Kopfhörer angeschlossen wird, um die übersetzten Textelemente alternativ oder zusätzlich hörbar zu machen.

Die Darstellung der übersetzten Textelemente kann auf verschiedene Weise erfolgen, beispielsweise so, daß sie die Orginal-Textelemente ersetzen, die in diesem Fall aus dem Bild entfernt werden. Alternativ wäre es möglich, die übersetzten Textelemente unmittelbar neben oder über bzw. unter den Original-Textelementen oder an einer vorgewählten Stelle des Bildes, z. B. am unteren Bildrand darzustellen und die Orginal-Textelemente mit einem Verweis auf die übersetzten Textelemente (und/oder umgekehrt) zu versehen.

Die Erfindung schafft somit ein Bildverarbeitungssystem mit einer in dieses integrierten automatischen Übersetzungseinrichtung zur Übersetzung von in den Bildern enthaltenen Textelementen in eine andere Sprache, wobei die übersetzten Textelemente wahlweise für eine gemeinsam mit den Original-Textelementen erfolgende Darstellung oder für eine auf beliebige Weise erfolgende Weiterverarbeitung bereitgestellt werden. Dies wird dadurch erreicht, daß in den Bilddatenfluß an einer Stelle zwischen der Bildquelle 1 bzw. der dieser zugeordneten Bildverarbeitungseinrichtung 3 und der Bildwiedergabesteuerung 5 eingegriffen und parallel zu diesem Datenfluß eine Erkennung und Übersetzung von Textelementen vorgenommen wird. Dabei ist die beschriebene Bildverarbeitungseinheit 11 vorzugsweise nicht nur ein integraler Bestandteil des beschriebenen Bildverarbeitungssystems, sondern auch ein integraler Bestandteil eines mit einem solchen Bildverarbeitungssystem ausgerüsteten, z. B. aus einem Camcorder, einem Fernsehgerät oder dgl. bestehenden Apparats. Alternativ ist es aber auch möglich, die der Bildverarbeitung dienenden Signale per Funk (drahtlos) an eine mit einem Computer ausgerüstete, stationäre oder mobile Verarbeitungseinrichtung zu übermitteln, von dieser die erforderlichen Analysen und Übersetzungen durchführen zu lassen und das erhaltene Ergebnis, d.h. die übersetzten Textelemente, dann allein oder zusammen mit den ursprünglichen Bildsignalen per Funk an das die Bildquelle 1 oder die Bildverarbeitungseinrichtung 3 aufzuweisende Gerät (oder auch irgendein anderes Gerät) zurück- bzw. weiterzuleiten. Derartige Anwendungen bieten sich besonders bei Mobilfunkendgeräten, digitalen Kameras mit Mobilfunk, mobilen digitalen Bildverarbeitungsgeräten und Geräten aller Art mit drahtloser Datenübertragung, insbesondere mobilen Telefonen (Handys) unter Benutzung üblicher Vermittlungsstellen (Handynetze) an.

Die Erfindung ist nicht auf das beschriebene Ausführungsbeispiel beschränkt, das auf vielfache Weise abgewandelt werden kann. Insbesondere stellt das anhand der Fig. 1 dargestellte Bildverarbeitungssystem nur ein Ausführungsbeispiel dar, dessen einzelne Komponenten auf vielfache Weise verändert und gegen andere ausgetauscht werden können. Auch stellt die obige Beschreibung keine Beschränkung der Erfindung auf einen besonderen Anwendungsfall dar. Schließlich versteht sich, daß die verschiedenen Merkmale und Blöcke auch in anderen als den dargestellten und beschriebenen Kombinationen angewendet werden können.

## Patentansprüche

1. Digitales Bildverarbeitungssystem zur Verarbeitung und ggf. Darstellung von Bildern mit Bild- und Original-Textelementen, enthaltend eine digitale Bildquelle (1), eine Bildwiedergabesteuerung (5) und eine zwischen die Bildquelle (1) und die Bildwiedergabesteuerung (5) geschaltete Bildverarbeitungseinrichtung (3), dadurch gekennzeichnet, daß es mit einer zur Bereitstellung von Übersetzungen der Original-Textelemente in eine andere Sprache eingerichteten Bildverarbeitungseinheit (11) versehen ist, die eine Texterkennungseinheit (17) und eine Textübersetzungseinheit (18) aufweist.

2. Bildverarbeitungssystem nach Anspruch 1, dadurch gekennzeichnet, daß die Bildverarbeitungseinheit (11) einen mit der Bildverabeitungseinrichtung (3) verbundenen Eingang (12) und einen mit der Bildwiedergabesteuerung (5) verbundenen Ausgang (14) aufweist.

3. Bildverarbeitungssystem nach Anspruch 1 oder 2, dadurch gekennzeichnet, daß die Bildverarbeitungseinheit (11) eine Bildaufbereitungseinheit (15) aufweist, die den Datenfluß zu und von der Texterkennungs- und Textübersetzungseinheit (17 bzw. 18) steuert.

4. Bildverarbeitungssystem nach Anspruch 3, dadurch gekennzeichnet, daß die Bildaufbereitungseinheit (15) als Programmbaustein der Bildverarbeitungseinrichtung (3) ausgebildet ist.

5. Bildverarbeitungssystem nach Anspruch 4, dadurch gekennzeichnet, daß die Bildaufbereitungseinheit (15) als separater Baustein der Bildverarbeitungseinheit (11) ausgebildet ist.

6. Bildverarbeitungssystem nach Anspruch 5, dadurch gekennzeichnet, daß die Bildaufbereitungseinheit (15) als Mikrocomputer ausgebildet ist.

7. Bildverarbeitungssystem nach einem der Ansprüche 1 bis 6, dadurch gekennzeichnet, daß der Bildverarbeitungseinheit (11) ein Schalter zur wahlweisen Darstellung der Original-Textelemente oder von übersetzten Textelementen zugeordnet ist.

8. Bildverarbeitungsssytem nach einem der Ansprüche 1 bis 7, dadurch gekennzeichnet, daß die Bildverarbeitungseinheit (11) zum Ersatz der Orginal-Textelemente durch die übersetzten Textelemente eingerichtet ist.

9. Bildverarbeitungssystem nach einem der Ansprüche 1 bis 8, dadurch gekennzeichnet, daß die Textübersetzungseinheit (17) wenigstens zwei, unterschiedlichen Sprachen zugeordnete Abschnitte und einen Wählschalter zur Auswahl der Sprache der Übersetzung aufweist.
